# EUROPÄISCHE PATENTSCHRIFT

(11) **EP 4 168 720 B1**
(45) Veröffentlichungstag und Bekanntmachung des Hinweises auf die Patenterteilung: **29.01.2025**
(21) Anmeldenummer: 21719586.6
(22) Anmeldetag: 14.04.2021
(51) Int. Cl.: F24H 1/10, C02F 1/42, F24H 8/00, F24H 9/20, F24D 19/00

(54) **HEIZVORRICHTUNG MIT INTEGRIERTER WASSERENTKALKUNG**
HEATING DEVICE WITH INTEGRATED WATER DECALCIFICATION
DISPOSITIF DE CHAUFFAGE AVEC DÉCALCIFICATION D'EAU INTÉGRÉE

(30) Priorität: 17.06.2020 PT 2020116501
(43) Veröffentlichungstag der Anmeldung: 26.04.2023
(73) Patentinhaber: Robert Bosch GmbH, 70442 Stuttgart (DE)
(72) Erfinder: CUNHA, Patrick, 3070-110 Mira Coimbra (PT); SALUSTIO, Sergio, 3800-344 Aveiro (PT)
(86) Internationale Anmeldenummer: PCT/EP2021/059688
(87) Internationale Veröffentlichungsnummer: WO 2021/254675

(56) Entgegenhaltungen:
- EP-A1- 3 376 118
- EP-B1- 3 376 118
- DE-U1- 202017 103 177
- US-A1- 2017 328 597

## Beschreibung

Die Erfindung betrifft ein Verfahren zum Betreiben einer Heizvorrichtung, insbesondere einer Warmwasserheizvorrichtung, sowie eine Heizvorrichtung.

### Stand der Technik

Der Einsatz von Warmwasserheizvorrichtung ist weit verbreitet. Derartige Warmwasserheizvorrichtungen umfassen einen Wärmetauscher, welcher durch einen Verbrennungsprozess oder elektrisch erhitzt wird, um einen Wasserstrom aufzuheizen. Die Effizienz derartiger Warmwasserheizvorrichtung ist von unterschiedlichen Faktoren, wie beispielsweise der Geometrie und der Wärmeleitfähigkeit des Wärmetauschers, abhängig. Aus diesem Grund wirkt sich jede Ablagerung im Wärmetauscher nachteilig auf die Wärmeleitfähigkeit des Wärmetauschers aus. Insbesondere kann die Wärmeleitfähigkeit durch Kalkablagerungen beeinträchtigt werden. Die Kalkablagerungen werden durch die Ausfällung von Kalzium im Wasser aufgrund der Temperaturerhöhung während des Betriebs der Warmwasserheizvorrichtung gebildet. Folglich nimmt die Effizienz der Warmwasserheizvorrichtung im Laufe der Zeit durch die Zunahme der Kalkschicht ab.

Üblicherweise wird bei einem hohen Kalkgehalt im Wasser eine Wasserentkalkungsanlage der Warmwasserheizvorrichtung vorgeschaltet, um der Verringerung der Effizienz entgegenzuwirken. Derartige Wasserentkalkungsanlagen weisen Filter auf, welche regelmäßig regeneriert werden müssen. Hierfür wird ein Regeneriersalz eingesetzt. Nachteilig an einer derartigen Lösung sind die Anschaffungskosten der Wasserentkalkungsanlage und das kontinuierliche Nachfüllen des Regeneriersalzes, um die Funktion der Wasserentkalkungsanlage zu gewährleisten.

Aus EP 3 376 118 A1 ist eine Armaturenanordung zum Aufbereiten von Wasser für einen geschlossenen Heizkreislauf bekannt. Dabei wird in einer Heizvorrichtung Wasser durch einen lonenfilter zur Entkalkung geleitet. Der lonenfilter kann dabei in seiner Wirkweise überwacht werden. Bei einer Erschöpfung des lonenfilters besteht die Möglichkeit ein Signal zu senden.

Aus WO 2021/062239 A1 ist ein Wasserheizgerät mit integriertem Kalkkontrollmodul bekannt.

Die US 2017/328597 A1 offenbart eine Verbrennungsvorrichtung, die insbesondere dazu ausgelegt ist, ein von einem Brenner erzeugtes Verbrennungsabgas von oben nach unten durch einen Wärmetauscher strömen zu lassen. Das sich aus dem Verbrennungsabgas entstehende Kondensat, kann mittels einer Abdeckung aufgefangen werden.

Aus DE 20 2017 103177 U1 ist eine Armaturenanordung bekannt. Die Armaturenanordung verfügt unter anderem über eine Wasserenthärtungseinheit, oder andere Wasserbehandlungseinheiten. Dabei wird mit einem lonentauschfilter das zugeführte Wasser enthärtet.

### Offenbarung der Erfindung

Die der Erfindung zugrunde liegende Aufgabe kann darin gesehen werden, ein Verfahren und eine Heizvorrichtung vorzuschlagen, welche eine Kalkbildung in einem Wärmetauscher verhindern.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zum Betreiben einer Heizvorrichtung, insbesondere einer Warmwasserheizung, bereitgestellt. Die Heizvorrichtung kann in einem Regenerierungsbetrieb oder in einem regulären Betrieb zum Bereitstellen von Warmwasser betrieben werden.

In einem Schritt wird kaltes Wasser durch mindestens einen lonenaustauschfilter gefiltert. Anschließend wird das kalte Wasser in einen durch einen Verbrennungsprozess erwärmten Wärmetauscher der Heizvorrichtung geleitet und erwärmt. Das erwärmte Wasser wird aus der Heizungsvorrichtung, beispielsweise zu einer Wasserentnahmestelle bzw. einem Wasserhahn geleitet. Bevorzugterweise wird ein während des Verbrennungsprozesses entstehendes Kondensat in einem Sammelbehälter aufgefangen und zum Regenerieren des lonenaustauschfilters während des Regenerierungsbetriebs durch den lonenaustauschfilter geleitet.

Durch diese Maßnahme können die Vorteile einer Wasserentkalkungsanlage in eine Heizvorrichtung integriert werden, wobei das regelmäße Nachfüllen des Regeneriersalzes entfällt. Das Kondensat entsteht während des konventionellen Verbrennungsprozesses und kann sich im Sammelbehälter ansammeln.

Das Kondensat bildet sich durch Kontakt von Verbrennungsgasen an kühlen Oberflächen im Wärmetauscher und kann insbesondere Salpetersäure, Schwefelsäure und Salzsäure aufweisen. Das säurehaltige Kondensat eignet sich somit für die Regenerierung des lonenaustauschfilters, welcher das Kalzium aus kalkhaltigem Wasser aufnimmt. Das Kondensat kann somit das Kalzium im Ionenaustauschfilter herauslösen und die Aufnahmefähigkeit des lonenaustauschfilters sicherstellen. Insbesondere kann das Kondensat anstelle des Regenerationssalzes eingesetzt werden.

Der lonenaustauschfilter kann vorzugsweise in die Heizvorrichtung integriert sein.

Bei einer Ausführungsform wird das Kondensat als eine mit Wasser verdünnte Lösung zum Regenerieren des lonenaustauschfilters durch den lonenaustauschfilter in einen Abfluss geleitet. Da das Kondensat in einer hochkonzentrierten Form vorliegen kann, ist eine Verdünnung mit Wasser vorteilhaft, um eine längere Beaufschlagung und damit Regenerierung des lonenaustauschfilters zu ermöglichen.

Während das verdünnte Kondensat den lonenaustauschfilter passiert, findet ein Ionenaustauschprozess statt, welcher die durch den lonenaustauschfilter absorbierten Kalzium-Ionen löst und entfernt. Anstelle der Kalzium-Ionen können Wasserstoff-Ionen in den lonenaustauschfilter gelangen und die Aufnahmefähigkeit für Kalk wiederherstellen. Hierdurch wird die Fähigkeit des lonenaustauschfilters zum Entkalken des Wassers erneut hergestellt.

Gemäß einem weiteren Ausführungsbeispiel wird eine elektrische Leitfähigkeit der Lösung durch einen Leitfähigkeitssensor gemessen, wobei die Regenerierung des lonenaustauschfilters beendet wird, wenn die gemessene elektrische Leitfähigkeit unter einen Grenzwert sinkt. Wird die Regenerierung des lonenaustauschfilters eingeleitet, so kann die elektrische Leitfähigkeit des Kondensats oder des verdünnten Kondensats gemessen werden.

Wird der mit dem Kondensat gefüllte Sammelbehälter vollständig geleert, so sinkt die elektrische Leitfähigkeit auf einen Wert von reinem Wasser bzw. einen Referenzwert für die elektrische Leitfähigkeit des Wassers. Dieses Absinken der elektrischen Leitfähigkeit kann als Auslöser zum Anhalten der Regenerierung eingesetzt werden. Hierbei können Ventile angesteuert werden, um die Verbindung der entsprechenden Rohrleitungen zum Sammelbehälter abzukoppeln.

Der Referenzwert der elektrischen Leitfähigkeit kann vordefiniert sein und als der Grenzwert dienen.

Bei der Regenerierung des lonenaustauschfilters können Rohrverbindungen durch Ventile derart eingestellt werden, dass das Kondensat aus dem Sammelbehälter durch den Ionenaustauschfilter geführt wird. Hierbei kann das Kondensat nach dem Befördern aus dem Sammelbehälter mit Wasser verdünnt werden oder durch ein Einleiten von Wasser in den Sammelbehälter in verdünnter Form aus dem Sammelbehälter geschwemmt werden.

Wird der Sammelbehälter geleert bzw. das gesammelte Kondensat aus dem Sammelbehälter gefördert, so können die Rohrverbindungen zum Sammelbehälter abgekoppelt werden, sodass das Wasser aus einer der Wasserzufuhr direkt durch den Ionenaustauschfilter geführt wird, bevor das Wasser in den Wärmetauscher gelangen kann.

Nach einem weiteren Aspekt der Erfindung wird eine Heizvorrichtung zum Erwärmen von kaltem Wasser aus einer Wasserzufuhr bereitgestellt. Die Heizvorrichtung weist einen lonenaustauschfilter zum Verringern eines Kalkgehalts im kalten Wasser, eine Verbrennungsanlage zum Erzeugen von Wärme durch einen Verbrennungsprozess und einen Wärmetauscher zum Übertragen der durch den Verbrennungsprozess erzeugten Wärme in durch den lonenaustauschfilter gefiltertes kaltes Wasser.

Ein während eines Betriebs der Verbrennungsanlage entstehendes Kondensat ist in einen Sammelbehälter leitbar. Bevorzugterweise ist der Sammelbehälter zum Regenerieren des lonenaustauschfilters fluidleitend mit dem lonenaustauschfilter verbindbar.

Hierdurch kann eine Heizvorrichtung bereitgestellt werden, welche einen integrierten lonenaustauschfilter aufweist. Der lonenaustauschfilter kann anstelle eines Regeneriersalzes durch das gesammelte Kondensat regeneriert werden. Dabei kann eine Heizvorrichtung realisiert werden, welche automatisiert und ohne einen zusätzlichen Aufwand für den Betreiber eine Entkalkungsfunktion aufweist. Das Kaufen und Auffüllen des Regeneriersalzes kann somit entfallen.

Gemäß einem weiteren Ausführungsbeispiel ist in Flussrichtung des kalten Wassers zwischen der Wasserzufuhr und dem Ionenaustauschfilter ein erstes Ventil und hinter dem lonenaustauschfilter ein zweites Ventil angeordnet, wobei das erste Ventil mit dem Sammelbehälter und das zweite Ventil mit einem Abfluss verbindbar ist. Die Ventile können beispielsweise als Dreiwegeventile oder als Einwegventile ausgestaltet sein. Durch diese Maßnahme können Rohrverbindungen zwischen der Wasserzufuhr, dem Ionenaustauschfilter, dem Wärmetauscher und dem Sammelbehälter je nach Betriebszustand variiert werden. Im regulären Betriebszustand der Heizanlage kann das Wasser aus der Wasserzufuhr durch den Ionenaustauschfilter in den Wärmetauscher gelangen. Während der Regenerierung können die Ventile die Rohrverbindungen derart umschalten, dass das Kondensat aus dem Sammelbehälter parallel zu der Wasserzufuhr durch den Ionenaustauschfilter geleitet wird. Bevor das Kondensat in den Wärmetauscher gelangen kann, wird die Lösung über das zweite Ventil entsorgt bzw. in einen Abfluss geführt.

Nach einer weiteren Ausführungsform ist zwischen dem ersten Ventil und dem lonenaustauschfilter ein Leitfähigkeitssensor zum Messen einer elektrischen Leitfähigkeit angeordnet. Durch das Messen der elektrischen Leitfähigkeit kann ein Ende der Regenerierung des lonenaustauschfilters festgestellt werden. Dieser Zeitpunkt kann vorzugsweise erreicht werden, wenn das sich im Sammelbehälter gesammelte Kondensat verbraucht ist.

Durch das säurehaltige Kondensat wird die elektrische Leitfähigkeit, welche der Leitfähigkeitssensor misst, erhöht. Nach dem Verbrauch des Kondensats sinkt die elektrische Leitfähigkeit.

Gemäß einem weiteren Ausführungsbeispiel ist zum Regenerieren des lonenaustauschfilters das Kondensat durch Schwerkraft, durch eine Pumpe oder durch Zuführen von kaltem Wasser aus der Wasserzufuhr aus dem Sammelbehälter über das erste Ventil in den lonenaustauschfilter leitbar bzw. förderbar. Durch diese Maßnahme kann das Kondensat, je nach Aufbau und Komplexität der Heizvorrichtung, basierend auf unterschiedlichen Mechanismen gefördert werden. Das Einleiten der Regenerierung kann beispielsweise in definierten zeitlichen Abständen erfolgen und durch eine Steuereinheit eingeleitet werden.

Wird der Sammelbehälter und der Wärmetauscher oberhalb des lonenaustauschfilters angeordnet, so kann das Kondensat aufgrund der Schwerkraft durch den Ionenaustauschfilter geleitet werden. Alternativ oder zusätzlich wird eine Förderpumpe eingesetzt, um das Kondensat zu fördern.

Durch den Einsatz der Förderpumpe kann die Anordnung des Sammelbehälters und des lonenaustauschfilters beliebig gewählt werden, wodurch eine höhere Designfreiheit bei der Konstruktion der Heizvorrichtung erreicht wird.

Bei einer weiteren Ausgestaltung kann das Wasser aus der Wasserzufuhr zum Spülen des Sammelbehälters und zum fördern des Kondensats aus dem Sammelbehälters eingesetzt werden. Dabei kann eine Abzweigung der Wasserzufuhr in den Sammelbehälter führen.

Alternativ oder zusätzlich können Messdaten eines Annäherungssensors verwendet werden, um die Regenerierung ausschließlich bei einer Abwesenheit eines Benutzers der Heizvorrichtung einzuleiten.

Nach einer weiteren Ausführungsformsind das erste Ventil und das zweite Ventil elektronisch oder manuell umschaltbar. Durch eine elektronische Steuerung der Ventile kann die Heizvorrichtung vollautomatisiert betreibbar sein.

Eine manuelle Steuerung der Ventile ermöglicht eine besonders robuste und technisch einfache Ausgestaltung der Heizvorrichtung. Dabei kann ein Benutzer manuell die Regenerierung des lonenaustauschfilters einleiten und anhalten. Vorteilhafterweise kann eine zeitlich gesteuerte Anzeige den Benutzer zum Einleiten oder zum Stoppen der Regenerierung hinweisen.

Gemäß einem weiteren Ausführungsbeispiel sind das erste Ventil und das zweite Ventil elektronisch durch eine Steuereinheit umschaltbar, wobei das erste Ventil und das zweite Ventil basierend auf Messdaten des Leitfähigkeitssensors und/oder einer Betriebszeit der Heizvorrichtung umschaltbar sind. Durch diese Maßnahme kann eine vollautomatisierte Heizvorrichtung umgesetzt werden, bei welcher ein Eingriff des Benutzers bzw. Anwenders zum Gewährleisten des Betriebs entfällt.

Nach einer weiteren Ausführungsform ist der Ionenaustauschfilter als ein einstufiger Filter oder als ein zweistufiger Filter ausgestaltet. Bei einer alternativen oder zusätzlichen Ausgestaltung kann der lonenaustauschfilter eine erste Stufe und eine zweite Stufe aufweisen. Während des Betriebs der Heizvorrichtung kann eine Stufe des lonenaustauschfilters zum Entkalken des Wassers eingesetzt werden, während die zweite Stufe durch das Kondensat regeneriert wird. Hierdurch kann ein Dauerbetrieb der Heizvorrichtung ohne eine Unterbrechung zum Durchführen der Regenerierung realisiert werden.

Im Folgenden werden anhand von stark vereinfachten schematischen Darstellungen bevorzugte Ausführungsbeispiele der Erfindung näher erläutert. Hierbei zeigen
- Fig. 1: eine schematische Darstellung einer Heizvorrichtung im regulären Betrieb gemäß einer Ausführungsform und
- Fig. 2: eine schematische Darstellung der Heizvorrichtung während einer Regenerierung gemäß einer Ausführungsform.

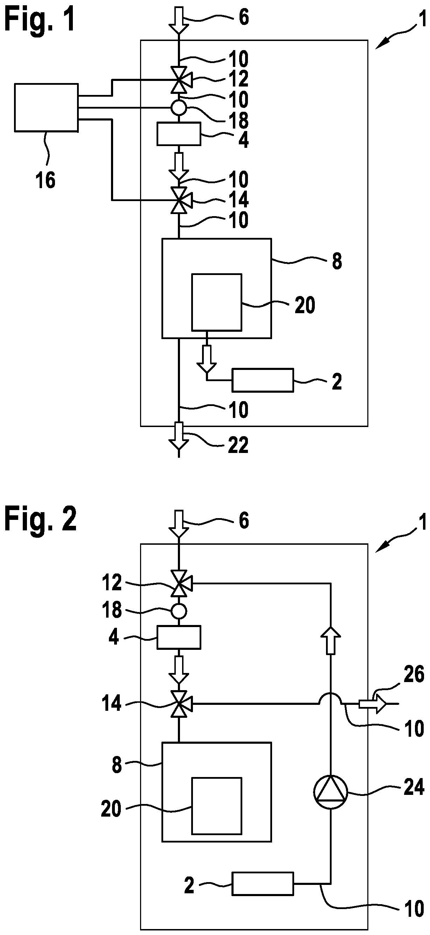

Die Figur 1 und Figur 2 dienen insbesondere der Veranschaulichung eines Verfahrens zum Betreiben einer Heizvorrichtung 1, bei welchem während eines Verbrennungsprozesses entstehendes Kondensat in einem Sammelbehälter 2 aufgefangen und zum Regenerieren eines lonenaustauschfilters 4 durch den lonenaustauschfilter 4 geleitet wird.

Die Figur 1 zeigt eine schematische Darstellung einer Heizvorrichtung 1 im regulären Betrieb gemäß einer Ausführungsform. Die Heizvorrichtung 1 dient zum Erwärmen von kaltem Wasser, welches aus einer Wasserzufuhr 6 in die Heizvorrichtung 1 einleitbar ist.

Das aus der Wasserzufuhr 6 in die Heizvorrichtung 1 eingeleitete kalte Wasser wird durch einen lonenaustauschfilter 4 gefiltert. Hierdurch kann dem kalten Wasser Kalk bzw. Kalzium entzogen werden, um Kalkablagerungen in einem dem Ionenaustauschfilter 4 nachgeschalteten Wärmetauscher 8 zu vermeiden.

Die Wasserzufuhr 6, der Ionenaustauschfilter 4 und der Wärmetauscher 8 sind über Rohrleitungen 10 fluidleitend miteinander verbunden. Zwischen der Wasserzufuhr 6 und dem Ionenaustauschfilter 4 ist ein erstes Ventil 12 in den Rohrleitungen 10 angeordnet. Zwischen dem lonenaustauschfilter 4 und dem Wärmetauscher 8 ist ein zweites Ventil 14 in die Rohrleitung 10 integriert.

Das erste Ventil 12 und das zweite Ventil 14 sind im dargestellten Ausführungsbeispiel als elektronisch gesteuerte Ventile ausgeführt und können durch eine Steuereinheit 16 gesteuert werden. Die Steuereinheit 16 kann dabei eine Zeitsteuerung und/oder eine sensorgestützte Steuerung der Ventile 12, 14 umsetzen. Hierzu kann die Steuereinheit 16 mit einem Leitfähigkeitssensor 18 datenleitend verbunden sein, welcher zwischen dem ersten Ventil 12 und dem lonenaustauschfilter 4 angeordnet ist.

Der Leitfähigkeitssensor 18 kann eine elektrische Leitfähigkeit des Wassers vor dem Eintritt in den lonenaustauchfilter 4 messen. Die Steuereinheit 16 kann dabei die gemessenen Werte der elektrischen Leitfähigkeit empfangen und auswerten, um eine Ansteuerung der Ventile 12, 14 zu ermöglichen.

Die Figur 1 zeigt die Heizvorrichtung 1 in einem regulären Betrieb, bei welchem eine Verbrennungsanlage 20 einen Brennstoff, wie beispielsweise Gas, Öl oder Pellets, verbrennt und Wärme erzeugt. Die erzeugte Wärme wird durch den Wärmetauscher 8 zum Heizen des Wassers genutzt.

Während des regulären Betriebs der Verbrennungsanlage 20 bildet sich Kondensat, welches in dem Sammelbehälter 2 aufgefangen wird. Das Kondensat ist säurehaltig und entsteht durch Kondensation von gasförmigen Verbrennungsprodukten an kalten Oberflächen des Wärmetauschers 8 und der Verbrennungsanlage 20.

Das im Sammelbehälter 2 aufgefangene Kondensat ist vorzugsweise zum Regenerieren des lonenaustauschfilters 4 nutzbar. Hierzu kann der Sammelbehälter 2 fluidleitend mit dem lonenaustauschfilter 4 verbindbar sein.

Während des regulären Betriebs der Heizvorrichtung 1 sind die Ventile 12, 14 derart eingestellt, dass das Wasser unmittelbar durch den Ionenaustauschfilter 4 und den Wärmetauscher 8 geführt wird.

Nach dem Erwärmen des Wassers durch den Wärmetauscher 8 kann das erwärmte Wasser aus der Heizvorrichtung 1 in eine Entnahmestelle 22 gelangen. Die Entnahmestelle 22 kann beispielsweise eine Armatur, ein Heizkörper und dergleichen sein.

Da der lonenaustauschfilter 4 eine begrenzte Kapazität hat, muss in regelmäßigen Zeitabständen eine Regenerierung des lonenaustauschfilters 4 durchgeführt werden, um die Kapazität des lonenaustauschfilters zum Aufnehmen von Kalzium wiederherzustellen.

Der Schritt der Regenerierung des lonenaustauschfilters 4 ist in der Figur 2 veranschaulicht. Die Figur 2 zeigt dabei die Heizvorrichtung 1 aus der Figur 1.

Der Übersicht halber ist in der Figur 2 die Kopplung der Ventile 12, 14 mit der Steuereinheit 16 und die Steuereinheit 16 nicht dargestellt.

Zum Durchführen der Regenerierung wird im dargestellten Ausführungsbeispiel der reguläre Betrieb zum Bereitstellen von Warmwasser unterbrochen. Hierzu werden die Ventile 12, 14 derart angesteuert, dass dem kalten Wasser aus der Wasserzufuhr 6 das Kondensat aus dem Sammelbehälter 2 zugeführt wird. Im dargestellten Ausführungsbeispiel wird das Kondensat über eine Förderpumpe 24 aus dem Sammelbehälter 2 gepumpt.

Das Kondensat kann über das erste Ventil 12 dem kalten Wasser beigemischt werden. Das erste Ventil 12 kann als ein Dreiwegeventil oder als ein Einwegventil mit einem angeschlossenen T-Stück ausgestaltet sein, um das Kondensat dem kalten Wasser aus der Wasserzufuhr 6 beizumischen.

Das Kondensat vermischt sich mit dem kalten Wasser zu einer säurehaltigen Lösung und wird durch den Ionenaustauschfilter 4 geleitet, um den lonenaustauschfilter 4 durch Lösen von Kalzium zu regenerieren. Das zweite Ventil 14 ist als ein Dreiwegeventil ausgestaltet und kann die aus dem lonenaustauschfilter 4 austretende Lösung zu einem Abfluss 26 leiten. Im Regenerierungsbetrieb ist der Wärmetauscher 8 durch das zweite Ventil 14 von der Wasserzufuhr 6 abgekoppelt.

Wenn der Sammelbehälter 2 im Regenerierungsbetrieb geleert wird, ändert sich die elektrische Leitfähigkeit der Lösung, welche durch das erste Ventil 12 durch den Leitfähigkeitssensor 18 fließt.

Insbesondere verringert sich die elektrische Leitfähigkeit der Lösung aufgrund einer Verringerung der Menge des säurehaltigen Kondensats. Basierend auf einem Abfall der gemessenen elektrischen Leitfähigkeit unterhalb eines Grenzwerts kann der Regenerierungsbetrieb gestoppt und die Ventile 12, 14 zum Fortsetzen des regulären Betriebs umgeschaltet werden.

## Patentansprüche

1. Verfahren zum Betreiben einer Heizvorrichtung (1), insbesondere einer Warmwasserheizung, in einem Regenerierungsbetrieb oder in einem regulären Betrieb zum Bereitstellen von Warmwasser, wobei kaltes Wasser durch mindestens einen lonenaustauschfilter (4) gefiltert wird, wobei das gefilterte Wasser in einen durch einen Verbrennungsprozess erwärmten Wärmetauscher (8) der Heizvorrichtung (1) geleitet und erwärmt wird, wobei das erwärmte Wasser aus der Heizungsvorrichtung (1) geleitet wird, **dadurch gekennzeichnet, dass** ein während des Verbrennungsprozesses entstehendes Kondensat in einem Sammelbehälter (2) aufgefangen und zum Regenerieren des lonenaustauschfilters (4) während des Regenerierungsbetriebs durch den lonenaustauschfilter (4) geleitet wird.

2. Verfahren nach Anspruch 1, wobei das Kondensat als eine mit Wasser verdünnte Lösung zum Regenerieren des lonenaustauschfilters (4) durch den lonenaustauschfilter (4) in einen Abfluss (26) geleitet wird.

3. Verfahren nach Anspruch 2, wobei eine elektrische Leitfähigkeit der Lösung durch einen Leitfähigkeitssensor (18) gemessen wird, wobei die Regenerierung des lonenaustauschfilters (4) beendet wird, wenn die gemessene elektrische Leitfähigkeit unter einen Grenzwert sinkt.

4. Heizvorrichtung (1) zum Erwärmen von kaltem Wasser aus einer Wasserzufuhr (6), aufweisend einen lonenaustauschfilter (4) zum Verringern eines Kalkgehalts im kalten Wasser, eine Verbrennungsanlage (20) zum Erzeugen von Wärme durch einen Verbrennungsprozess und aufweisend einen Wärmetauscher (8) zum Übertragen der durch den Verbrennungsprozess erzeugten Wärme in durch den lonenaustauschfilter (4) gefiltertes kaltes Wasser, mit einem Sammelbehälter, wobei ein während eines Betriebs der Verbrennungsanlage (20) entstehendes Kondensat in den Sammelbehälter (2) leitbar ist, **dadurch gekennzeichnet, dass** der Sammelbehälter (2) zum Regenerieren des lonenaustauschfilters (4) fluidleitend mit dem lonenaustauschfilter (4) verbindbar ist.

5. Heizvorrichtung nach Anspruch 4, wobei in Flussrichtung des kalten Wassers zwischen der Wasserzufuhr (6) und dem Ionenaustauschfilter (4) ein erstes Ventil (12) und hinter dem lonenaustauschfilter (4) ein zweites Ventil (14) angeordnet ist, wobei das erste Ventil (12) mit dem Sammelbehälter (2) und das zweite Ventil (14) mit einem Abfluss (26) verbindbar ist.

6. Heizvorrichtung nach Anspruch 4 oder 5, wobei zwischen dem ersten Ventil (12) und dem lonenaustauschfilter (4) ein Leitfähigkeitssensor (18) zum Messen einer elektrischen Leitfähigkeit angeordnet ist.

7. Heizvorrichtung nach einem der Ansprüche 4 bis 6, wobei zum Regenerieren des lonenaustauschfilters (4) das Kondensat durch Schwerkraft, durch eine Pumpe (24) oder durch Zuführen von kaltem Wasser aus der Wasserzufuhr (6) aus dem Sammelbehälter (2) über das erste Ventil (12) in den lonenaustauschfilter (4) leitbar ist.

8. Heizvorrichtung nach einem der Ansprüche 4 bis 7, wobei das erste Ventil (12) und das zweite Ventil (14) elektronisch oder manuell umschaltbar sind.

9. Heizvorrichtung nach einem der Ansprüche 6 bis 8, wobei das erste Ventil (12) und das zweite Ventil (14) elektronisch durch eine Steuereinheit (16) umschaltbar sind, wobei das erste Ventil (12) und das zweite Ventil (14) basierend auf Messdaten des Leitfähigkeitssensors (18) und/oder einer Betriebszeit der Heizvorrichtung (1) umschaltbar sind.

10. Heizvorrichtung nach einem der Ansprüche 4 bis 9, wobei der lonenaustauschfilter (4) als ein einstufiger Filter oder als ein zweistufiger Filter ausgestaltet ist.

## Claims

1. Method for operating a heating device (1), in particular a hot water heater, in a regeneration operating mode or in a regular operating mode to provide hot water, wherein cold water is filtered through at least one ion exchange filter (4), wherein the filtered water is conducted into and heated in a heat exchanger (8) of the heating device (1), which heat exchanger (8) is heated by a combustion process, wherein the heated water is conducted from the heating device (1), **characterized in that** a condensate formed during the combustion process is collected in a collection container (2) and conducted through the ion exchange filter (4) to regenerate the ion exchange filter (4) during the regeneration operating mode.

2. Method according to Claim 1, wherein the condensate is conducted through the ion exchange filter (4) into an outflow (26) as a water-diluted solution to regenerate the ion exchange filter (4).

3. Method according to Claim 2, wherein an electrical conductivity of the solution is measured by a conductivity sensor (18), wherein the regeneration of the ion exchange filter (4) is ended when the measured electrical conductivity falls below a limit value.

4. Heating device (1) for heating cold water from a water supply (6), having an ion exchange filter (4) for reducing a lime content in the cold water, a combustion system (20) for generating heat by a combustion process and having a heat exchanger (8) for transferring the heat generated by the combustion process into cold water filtered through the ion exchange filter (4), and comprising a collection container, wherein a condensate formed during an operation of the combustion system (20) can be conducted into the collection container (2), **characterized in that** the collection container (2) can be connected to the ion exchange filter (4) in a fluid-conducting manner to regenerate the ion exchange filter (4).

5. Heating device according to Claim 4, wherein, in the flow direction of the cold water, a first valve (12) is arranged between the water supply (6) and the ion exchange filter (4) and a second valve (14) is arranged downstream of the ion exchange filter (4), wherein the first valve (12) can be connected to the collection container (2) and the second valve (14) can be connected to an outflow (26).

6. Heating device according to Claim 4 or 5, wherein a conductivity sensor (18) for measuring an electrical conductivity is arranged between the first valve (12) and the ion exchange filter (4).

7. Heating device according to one of Claims 4 to 6, wherein, to regenerate the ion exchange filter (4), the condensate can be conducted from the collection container (2) via the first valve (12) into the ion exchange filter (4) by gravity, by a pump (24) or by supplying cold water from the water supply (6).

8. Heating device according to one of Claims 4 to 7, wherein the first valve (12) and the second valve (14) are electronically or manually switchable.

9. Heating device according to one of Claims 6 to 8, wherein the first valve (12) and the second valve (14) are electronically switchable by a control unit (16), wherein the first valve (12) and the second valve (14) are switchable on the basis of measurement data of the conductivity sensor (18) and/or an operating time of the heating device (1).

10. Heating device according to one of Claims 4 to 9, wherein the ion exchange filter (4) is configured as a one-stage filter or as a two-stage filter.

## Revendications

1. Procédé pour faire fonctionner un dispositif de chauffage (1), notamment un chauffage d'eau chaude, dans un fonctionnement de régénération ou dans un fonctionnement régulier pour fournir de l'eau chaude, de l'eau froide étant filtrée par au moins un filtre échangeur d'ions (4), l'eau filtrée étant dirigée et chauffée dans un échangeur de chaleur (8) du dispositif de chauffage (1) chauffé par un processus de combustion, l'eau chauffée étant dirigée hors du dispositif de chauffage (1), **caractérisé en ce qu'**un condensat produit pendant le processus de combustion est collecté dans un récipient collecteur (2) et est dirigé à travers le filtre échangeur d'ions (4) pour régénérer le filtre échangeur d'ions (4) pendant le mode de régénération.

2. Procédé selon la revendication 1, dans lequel le condensat est dirigé sous la forme d'une solution diluée avec de l'eau pour régénérer le filtre échangeur d'ions (4) à travers le filtre échangeur d'ions (4) dans une évacuation (26).

3. Procédé selon la revendication 2, dans lequel une conductivité électrique de la solution est mesurée par un capteur de conductivité (18), la régénération du filtre échangeur d'ions (4) étant arrêtée lorsque la conductivité électrique mesurée chute en dessous d'une valeur limite.

4. Dispositif de chauffage (1) pour chauffer de l'eau froide provenant d'une amenée d'eau (6), présentant un filtre échangeur d'ions (4) pour réduire la teneur en calcaire de l'eau froide, une unité de combustion (20) pour générer de la chaleur par un processus de combustion et présentant un échangeur de chaleur (8) pour transférer la chaleur générée par le processus de combustion dans l'eau froide filtrée par le filtre échangeur d'ions (4), avec un récipient collecteur, un condensat produit pendant un fonctionnement de l'unité de combustion (20) pouvant être conduit dans le récipient collecteur (2), **caractérisé en ce que** le récipient collecteur (2) peut être relié fluidiquement au filtre échangeur d'ions (4) pour régénérer le filtre échangeur d'ions (4).

5. Dispositif de chauffage selon la revendication 4, dans lequel, dans la direction d'écoulement de l'eau froide, une première soupape (12) est agencée entre l'amenée d'eau (6) et le filtre échangeur d'ions (4) et une deuxième soupape (14) est agencée en aval du filtre échangeur d'ions (4), la première soupape (12) pouvant être reliée au récipient collecteur (2) et la deuxième soupape (14) pouvant être reliée à une évacuation (26).

6. Dispositif de chauffage selon la revendication 4 ou 5, dans lequel un capteur de conductivité (18) pour mesurer une conductivité électrique est agencé entre la première soupape (12) et le filtre échangeur d'ions (4).

7. Dispositif de chauffage selon l'une quelconque des revendications 4 à 6, dans lequel, pour régénérer le filtre échangeur d'ions (4), le condensat peut être dirigé dans le filtre échangeur d'ions (4) par gravité, par une pompe (24) ou en amenant de l'eau froide de l'amenée d'eau (6) depuis le récipient collecteur (2) via la première soupape (12).

8. Dispositif de chauffage selon l'une quelconque des revendications 4 à 7, dans lequel la première soupape (12) et la deuxième soupape (14) sont commutables électroniquement ou manuellement.

9. Dispositif de chauffage selon l'une quelconque des revendications 6 à 8, dans lequel la première soupape (12) et la deuxième soupape (14) peuvent être commutées électroniquement par une unité de commande (16), la première soupape (12) et la deuxième soupape (14) pouvant être commutées sur la base de données de mesure du capteur de conductivité (18) et/ou d'un temps de fonctionnement du dispositif de chauffage (1).

10. Dispositif de chauffage selon l'une quelconque des revendications 4 à 9, dans lequel le filtre échangeur d'ions (4) est conçu comme un filtre à un seul étage ou comme un filtre à deux étages.
